# EUROPÄISCHE PATENTSCHRIFT

(11) **EP 0 358 858 B1**
(45) Veröffentlichungstag und Bekanntmachung des Hinweises auf die Patenterteilung: **20.07.1994**
(21) Anmeldenummer: 89110748.4
(22) Anmeldetag: 14.06.1989
(51) Int. Cl.: C08J 3/12, C08L 95/00

(54) **Bitumengranulat und Verfahren zu seiner Herstellung**
Bitumen granules and process for preparing same
Granulé de bitume et procédé pour sa préparation

(30) Priorität: 04.08.1988 DE 3826497
(43) Veröffentlichungstag der Anmeldung: 21.03.1990
(73) Patentinhaber: Degussa Aktiengesellschaft, 60311 Frankfurt (DE)
(72) Erfinder: Daniels, Ivo, D-6450 Hanau 9 (DE); Manner, Reinhard, Dr., D-6457 Maintal (DE); Müller, Karl-Hans, Dr., D-6454 Bruchköbel (DE); Barthel, Walter, D-6456 Langenselbold (DE)

(56) Entgegenhaltungen:
- EP-A- 0 024 513
- DE-A- 2 034 038
- GB-A- 2 152 941
- US-A- 2 759 843
- DATABASE WPIL (DERWENT) Nr. 82-09261E(05), Derwent Publications Ltd., London, GB; & NL-A-8003158

## Beschreibung

Die Erfindung betrifft ein Bitumengranulat sowie das Verfahren zu seiner Herstellung.

Bitumen ist ein Erdölprodukt, das durch Raffination des Erdöles gewonnen wird. Als hochmolekulares Gemisch von Kohlenwasserstoffen ist Bitumen eine dunkelfarbige, springharte bis zähflüssige, klebrige Masse mit wasserabstoßenden Eigenschaften (vgl. DIN 55 946).

Aufgrund des thermoplastischen Verhaltens ist Bitumen bei hoher Temperatur gut zu verarbeiten.

Für die meisten Anwendungen, z. B. zur Aufbereitung von Asphaltmischgut für den Straßenbau oder bituminösen Dachbahnen muß das Bitumen heißflüssig von der Raffinerie angeliefert und in isolierten Lagertanks bereitgehalten werden.

Es ist bekannt, ein pulverförmiges Bitumenkonzentrat mit einem Gehalt an synthetischer Kieselsäure von 10 bis 80 Gew.-% herzustellen, indem man das flüssige Bitumen auf Kieselsäure aufsprüht (DE-C-29 33 339 und EP-A-0 024 513).

Das bekannte Bitumenkonzentrat wird zur Erhöhung der Versteifungswirkung in Asphaltmischungen beim Straßenbau eingesetzt.

Das bekannte Bitumenkonzentrat hat den Nachteil, daß aufgrund des hohen Kieselsäuregehalts bei der Verarbeitung stets eine Verdünnung mit weiterem Bitumen (Bindemittel) notwendig ist.

Es besteht somit ein Bedürfnis nach einem rieselfähigen Bitumen, das direkt, ohne Aufschmelzen der Mineralmischung zugesetzt werden kann, wobei ein Zusatz an weiterem flüssigen oder festem Bindemittel nicht notwendig ist, und auch die manchmal unerwünschte Versteifungzwirkung des hohen Kieselsäureanteils nicht eintritt.

Gegenstand der Erfindung ist ein rieselfähiges Bitumengranulat mit einer Teilchengröße von 500 bis 700 »m, das 0,5 bis 6 Gew.-% Fällungskieselsäure oder Ruß Umpuderungs- und Trennmittel enthält und aus Bitumentröpfchen, die von dem Umpuderungs- und Trennmittel umhüllt und dadurch vor Verbackung und Verkleben an den Grenzflächen bewahrt werden, besteht.

In einer bevorzugten Ausführungsform der Erfindung beträgt der Gehalt an Umpuderungs- und Trennmittel 1,5 bis 3 Gew.-%.

Die Schüttdichte des erfindungsgemäßen Bitumengranulates beträgt 400 bis 800 g / l (gemessen nach DIN 53 912).

Als Bitumen können alle bekannten Bitumensorten eingesetzt werden. Besonders geeignet sind Bitumensorten, die bei Raumtemperatur fest sind.

Kaum geeignet sind weichere Straßenbaubitumensorten, wie z. B. B 200.

Als Umpuderungs- und Trennmittel werden für das erfindungsgemäße Bitumengranulat synthetische Kieselsäuren, die durch Fällung erhalten wurden, oder Ruße eingesetzt.

Die Fällungskieselsäuren können unvermahlen, vermahlen, sprühgetrocknet oder sprühgetrocknet und vermahlen eingesetzt werden.

Beispielhaft können die folgenden Fällungskieselsäuren eingesetzt werden, wobei der Fällungskieselsäure Sipernat® 22 LS der Vorzug gegeben wird:

| | | FK 320 DS | Durosil® | Sipernat® 22 | Sipernat® 22 S | Sipernat® 22 LS |
|---|---|---|---|---|---|---|
| Oberfläche nach BET 1) | m²/g | 170 | 60 | 190 | 190 | 190 |
| Mittlere Größe der Primärteilchen | nm | 18 | 40 | 18 | 18 | 4,5 |
| Stampfdichte 2) | g/l | 80 | 210 | 270 | 120 | 80 |
| pH-Wert 3) | | 6,3 | 9 | 6,3 | 6,3 | 6,3 |
| Siebrückstand (nach Mocker 45 »m) 4) | % | 0,01 | 0,3 | 0,5 | 0,1 | 0,1 |
| Trocknungsverlust (2 h, 105 °C) 5) | % | 6 | 6 | 6 | 6 | 6 |
| Glühverlust (2 h, 1000 °C) 5) 6) | % | 5 | 6 | 5 | 5 | 5 |
| SiO₂ 7) | % | 98 | 98 | 98 | 98 | 98 |
| Na₂O 7) | % | 1 | 1 | 1 | 1 | 1 |
| Fe₂O₃ 7) | % | 0,03 | 0,03 | 0,03 | 0,03 | 0,03 |
| So₃ 7) | % | 0,8 | 0,8 | 0,8 | 0,8 | 0,8 |

| | | | | | | |
|---|---|---|---|---|---|---|
| 1) nach DIN 66 131 | | | | | | |
| 2) nach DIN 53 194 (nicht gesiebt), ISO 787/XI oder JIS K 5101/18 | | | | | | |
| 3) nach DIN 53 200 (in 5 %iger wäßriger Dispersion), ISO 787/IX, ASTM D 1208 oder JIS K 5101/24 | | | | | | |
| 4) nach DIN 53 580, ISO 787/XVII oder JIS K 5101/20 | | | | | | |
| 5) nach DIN 55 921, ASTM D 1208 oder JIS K 5101/23 | | | | | | |
| 6) bezogen auf die 2 Stunden bei 105 °C getrocknete Substanz | | | | | | |
| 7) bezogen auf die 2 Stunden bei 1000 °C geglühte Substanz | | | | | | |

| | | Extrusil® |
|---|---|---|
| Oberfläche nach BET 1) | m²/g | 35 |
| Mittlere Größe der Primärteilchen | nm | 25 ⁹⁾ |
| Stampfdichte 2) | g/l | 300 |
| pH-Wert 3) | | 10 |
| Siebrückstand (nach Mocker, 45 »m) 4) | % | 0,2 |
| Trocknungsverlust (2 h, 105 °C) 5) | % | 6 |
| Glühverlust (2 h, 1000 °C) 5) 6) | % | 7 |
| SiO₂ 7) | % | 91 |
| Al₂O₃ 7) | % | 0,2 |
| CaO 7) | % | 6 |
| Na₂O 7) | % | 2 |
| Fe₂O₃ 7) | % | 0,03 |
| SO₃ 7) | % | - |
| Cl⁻ 7) | % | 0,8 |

| | | |
|---|---|---|
| 1) nach DIN 66 131 | | |
| 2) nach DIN 53 194 (nicht gesiebt), ISO 787/XI oder JIS K 5101/18 | | |
| 3) nach DIN 53 200 (in 5 %iger wäßriger Dispersion), ISO 787/IX, ASTM D 1208 oder JIS K 5101/24 | | |
| 4) nach DIN 53 580, ISO 787/XVII oder JIS K 5101/20 | | |
| 5) nach DIN 55 921, ASTM D 1208 oder JIS K 5101/23 | | |
| 6) bezogen auf die 2 Stunden bei 105 °C getrocknete Substanz | | |
| 7) bezogen auf die 2 Stunden bei 1000 °C geglühte Substanz | | |
| 8) nicht reproduzierbar zu messen | | |
| 9) Die Größe der Primärteilchen ist bei Silikaten wegen starker Verwachsungen nicht genau zu bestimmen | | |
| 10) Gesamtglühverlust, 1 h 800 °C | | |
| 11) bezogen auf die 1 h bei 800 °C geglühte Substanz | | |

Die Bestimmung der physikalisch-chemischen Kenndaten erfolgt nach den folgenden Methoden:

### pH-Wert (nach DIN 53 200)

Der pH-Wert wird elektrometrisch mit einer Glaselektrode und einem pH-Meter ermittelt. Der pH-Wert von Kieselsäuren liegt im allgemeinen im neutralen, der von Silikaten im schwach alkalischen Bereich.

### Siebrückstand (nach DIN 53 580)

Eine Kennzahl für die Feinteiligkeit ist der Siebrückstand. Zur Erfassung der in kleinsten Mengen in Fällungskieselsäuren und Silikaten vorkommenden nicht oder schwerdispergierbarer Anteile, wird der Siebrückstand nach Mocker bestimmt. Bei diesem Verfahren wird eine Kieselsäuresuspension mit 4 bar Wasserdruck durch das Sieb gespült. Das Sieb wird anschließend getrocknet und der Siebrückstand ausgewogen. Zur Anwendung kommen 45 Micrometer-Siebe, die 325 mesh (nach ASTM) entsprechen.

### Oberfläche nach BIT (DIN 66 131)

Die Oberfläche von Kieselsäuren und Silikaten wird nach der BET-Methode in m²/g gemessen.

Das Verfahren beruht auf der Adsorption von gasförmigem Stickstoff bei der Temperatur des flüssigen Stickstoffs. Die Areameter-Methode nach Haul und Dümbgen kann vorteilhaft angewandt werden. Eine Eichung ist erforderlich. Es wird sowohl die "innere" als auch die "äußere" Oberfläche erfaßt.

### Mittlere Größe der Primärteilchen

Die mittlere Größe der Primärteilchen läßt sich über elektronenmikroskopische Aufnahmen bestimmen. Hierzu werden die Durchmesser von ca. 3.000 - 5.000 Teilchen bestimmt, deren arithmetisches Mittel errechnet wird. Die einzelnen Primärteilchen liegen im allgemeinen nicht isoliert vor, sondern sind zu Aggregaten und Agglomeraten vereinigt. Die "Agglomerat"-Teilchengröße von Fällungskieselsäuren und Silikaten hängt vom Vermahlungsprozeß ab.

### Stampfdichte (nach DIN 53 194)

Es handelt sich um eine Maßangabe für das Gewicht des pulverförmigen Produktes. Ca. 200 ml Kieselsäure werden in dem Meßzylinder des Stampfvolumeters 1.250 mal gestampft. Aus der Einwaage und dem Volumen wird die Stampfdichte berechnet und in g/l angegeben.

### Trocknungsverlust (nach DIN 55 921)

Die Fällungsprodukte enthalten einen kleinen Anteil physikalisch gebundenen Wassers. Nach 2 Stunden Trocknung im Trockenschrank bei 105 °C ist die Hauptmenge des physikalisch gebundenen Wassers entfernt.

### Glühverlust (nach DIN 55 921)

Nach 2 Stunden Glühzeit bei 1000 °C ist auch das chemisch in Form von Silanolgruppen gebundene Wasser entfernt. Der Glühverlust wird an der 2 h bei 105 °C getrockneten Substanz bestimmt.

Die Fällungskieselsäure FK 320 DS ist eine Fällungskieselsäure, die nach der Drehrohrtrocknung dampfstrahlvermahlen wurde.

Die Fällungskieselsäure Durosil® ist eine unvermahlene drehrohrgetrocknete Fällungskieselsäure.

Die Fällungskieselsäure Sipernat® 22 ist eine sprühgetrocknete Fällungskieselsäure.

Die Fällungskieselsäure Sipernat® 22 S ist eine sprühgetrocknete und vermahlene Fällungskieselsäure.

Die Fällungskieselsäure Sipernat® 22 LS ist eine sprühgetrocknete und luftstrahlvermahlene Fällungskieselsäure.

Die Fällungskieselsäure Extrusil® ist eine Fällungskieselsäure mit einem geringen Anteil an Calciumsilikat.

Als Ruße kann man bei dem erfindungsgemäßen Bitumengranulat Ruße einsetzen, die nach einem bekannten Verfahren, wie z. B. Flammruß-, Gasruß- oder Furnacerußverfahren hergestellt wurden (vgl. Ullmanns Enzyklopädie der technischen Chemie, 4. Auflage, Band 14, Seite 633 bis 648).

In einer bevorzugten Ausführungsform der Erfindung kann man den Degussa-Ruß PRINTEX XE2 mit den folgenden physikalisch-chemischen Kenndaten einsetzen:

| Spezifische Oberfläche: | | |
|---|---|---|
| - nach BET DIN 66 132 / ASTM D 3037 | (m²/g) | 1000 |
| - durch Jodadsorption DIN 53 582 / ASTM D 1510 (Einwaage 0,05 g) | (mg/g) | 1000 |
| DBP-Adsorption DIN 53 601 / ASTM D 2414 (Einwaage 10 g) | (ml/100g) | 370 |
| pH-Wert DIN 53 200 / ASTM 1512 | | 8 |
| Stampfdichte DIN 53 194 / ISO 787 XI | (g/l) | 140 |
| Trocknungsverlust DIN 53 198 /ASTM D 1509 | (%) | max. 1 |
| Veraschungsrückstand DIN 53 586 / ASTM D 1506 | (%) | max. 1 |
| Siebrückstand nach Mocker DIN 53 580 / ASTM D 1514 | (%) | max. 0,05 |

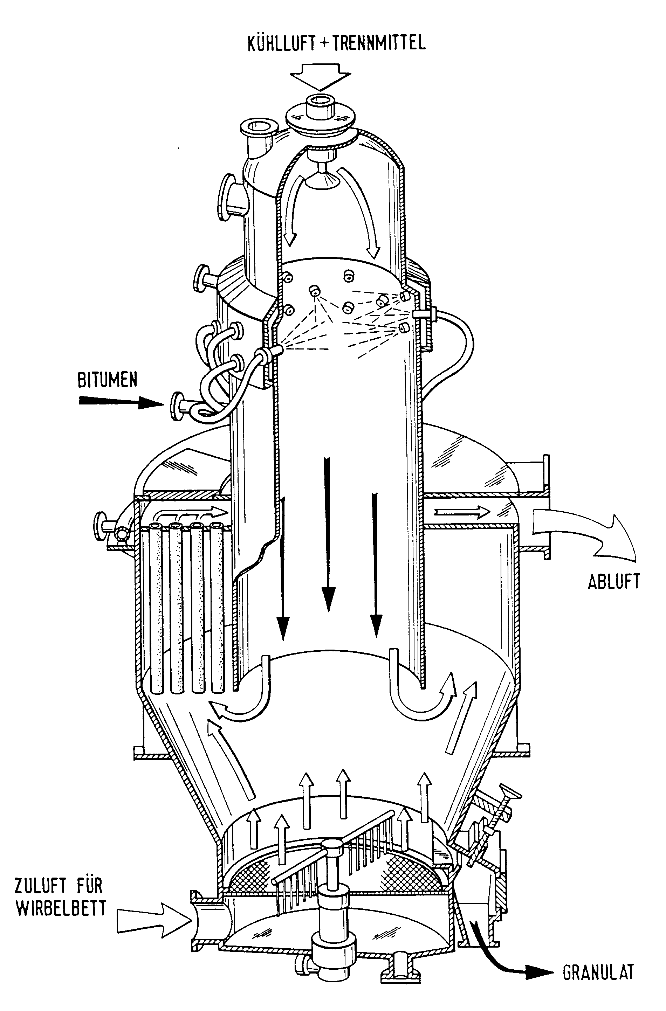

Ein weiterer Gegenstand der Erfindung ist das Verfahren zur Herstellung des erfindungsgemäßen Bitumengranulates, welches dadurch gekennzeichnet ist, daß man in einem bekannten Sprühgranulator (Figur 1) heißes, flüssiges Bitumen verdüst und gleichzeitig über den Kaltluftstrom Fällungskieselsäure oder Ruß als Umpuderungs- und Trennmittel in den Sprühmischer einträgt, wobei die Bitumentröpfchen von dem Umpuderungs- und Trennmmittel umhüllt und dadurch vor Verbackung und Verkleben an den Grenzflächen bewahrt werden.

Bei dem erfindungsgemäßen Verfahren erkalten die flüssigen Bitumentröpfchen in dem Kaltluftstrom. Während dieses Schrittes werden die Bitumentröpfchen von dem Umpuderungs- und Trennmittel umhüllt und dadurch vor Verbackung und Verkleben an den Grenzflächen bewahrt.

Das Bitumen ist in kaltem Zustande fest. Es muß vor der Zugabe in den Sprümischer aufgeschmolzen werden.

Besonders wirtschaftlich ist die Verarbeitung von flüssigem und heißem Bitumen aus direktem Raffineriebezug bzw. die Stationierung des Sprühmischers in der Raffinerie.

Bei dem erfindungsgemäßen Verfahren können bevorzugt die folgenden Parameter eingehalten werden:

| | |
|---|---|
| Bitumentemperatur: | > 180 °C |
| Kühllufttemperatur: | < 10 °C |
| Viskosität des Bitumens beim Versprühen: | (< 70 cp) < 70 m Pa·s |

Das derart hergestellte, erfindungsgemäße Bitumengranulat kann mit weiterem Umpuderungs- und Trennmittel vermischt werden.

Das erfindungsgemäße Bitumengranulat behält die typenspezifischen Eigenschaften des eingesetzten Bitumens und wirkt nach dem Aufschmelzen als Bindemittel.

Für verschiedene Anwendungen können die Anteile an Umpuderungs- und Trennmittel als Zuschlagstoffe dienen.

Das erfindungsgemäße Bitumengranulat weist die folgenden Vorteile auf:
Die Herstellung kann in der Raffinerie erfolgen. Im Zuge der Verlagerung der Mineralölaufbereitungsstätten aus den Industrie- bzw. Verbraucherländern in die Länder der Erdölgewinnung können Probleme entstehen, den "Destillationssumpf" Bitumen als zähflüssige elastoviskose Masse zu transportieren.

Ein Ausgießen in Blöcke erfordert einen Aufschmelzprozeß an der Stätte der Verarbeitung vor der Dosierung.

Der Vertrieb eines pulverförmigen Stoffes ist weniger aufwendig zu handhaben. Für kleine bis mittlere Abnahmemengen bietet sich die Verpackung in umweltfreundliche Papiersäcke an. Darüber hinaus sind Großgebinde und Silos möglich.

Im Regelfalle läßt sich kaltes Schüttgut einfacher dosieren als heißflüssige Massen.

Für die Straßenasphaltaufbereitung bietet sich eine Vereinfachung der Mischanlagen an, sowohl für die Bitumenbevorratung als auch für die Mischtechnologie.

Die Herstellung und Verarbeitung von bituminösen Dachbaustoffen wird erleichtert.

Die Produktion von Bautenschutzprodukten (z. B. bituminöse Lacke und Anstrichstoffe) auf Lösungsmittel bzw. Emulsionsbasis wird erleichtert.

Das erfindungsgemäße Bitumengranulat ist ein kalt ausbringbares, pulverförmiges Bindemittel, das durch Erwärmen vor Ort (z. B. Aufschmelzen) verwendbar wird. Damit können Reparaturen an der Baustelle, auf Straßen, Brücken, Dächern etc. ausgeführt werden.

Es ermöglicht die vereinfachte Herstellung spezieller Baustoffe (z. B. Isolierplatten) durch Verwendung des granulatförmigen Bitumens beim heißen Verpressen.

### Beispiel

Bitumengranulat wird durch ein Sprühgranulationsverfahren hergestellt. Die Anlage besteht aus dem Sprühgranulator der Firma Luco-Sprühmisch-Technic GmbH, einer Schmelzstation und einem Mischer. In dem Schmelzbehälter wird eine handelsübliche, kalte Bitumensorte aufgeschmolzen. Das flüssige Bitumen wird anschließend im Sprühgranulator verdüst. Dabei findet im Sprühturm die Granulierung statt. Als Umpuderungs- und Trennmittel wird eine Kieselsäure Sipernat® 22S verwendet. Das abgekühlte Bitumengranulat wird in einem Mischer nachbehandelt.

Die Schmelzstation besteht aus einem Behälter, der durch Heizbänder erwärmt wird. Eine andere Art von Heizung, z. B. mit Doppelwand und Thermoöl, ist durchaus denkbar.

Die Temperatur im Behälter wird mittels eines Thermostates geregelt. Mit der derzeitigen Ausrüstung der Anlage kann eine Temperatur von ungefähr 250 °C erreicht werden. Für bestimmte schwerschmelzbare Bitumensorten ist ein höherer Temperaturbereich nötig (300 - 350 °C).

Aus dem Behälter wird mit einer Pumpe gefördert. Auf der Druckseite der Pumpe ist ein Pulsationsdämpfer zum Ausgleich der durch die Kolbenpumpe erzeugten Pulsationen installiert. Der Pulsationsdämpfer ist ein Rohr, das auf der Druckseite der Pumpe montiert wird. Dieses Rohr ist an der Oberseite durch einen Flansch verschlossen. Auf diesem Flansch ist ein Manometer angebracht. Während des Betriebszustandes pumpt die Pumpe erst das Bitumen in den Pulsationsdämpfer, wodurch ein Luftpolster entsteht. Dieses Luftpolster kompensiert in weitem Maße die von der Pumpe erzeugte Pulsation und ermöglicht bei dem Verdüsen des Bitumens einen fast konstanten Sprühkegel.

Alle Leitungen ab Behälter sind bis 250 °C begleitbeheizt. Die Leitungsführung aus dem Behälter geht entweder zum Sprühgranulator oder zurück zum Behälter.

Das Bitumen gelangt mit einer Temperatur von ungefähr 200 °C (die exakte Temperatur ist eine Funktion der Bitumensorte) in den Sprühgranulator der Firma Luco. Das Gerät kombiniert 2 Verfahren, die Wirbelbett- und die Zerstäubungstechnik. Im Oberteil des Turms wird das Bitumen verdüst. Gleichzeitig wird im Sprühturm das Trennmittel Kieselsäure Sipernat® 22S zugegeben. Die sich abkühlenden Bitumenteilchen umhüllen sich mit dem Trennmittel Kieselsäure Sipernat® 22S, das ein Zusammenkleben des Bitumens verhindert. Das teilweise noch warme Bitumengranulat fällt im Turm weiter nach unten und erreicht dann das Wirbelbett, welches zur weiteren Abkühlung des Bitumengranulates dient. Erst wenn das Bitumen auch seine innere Wärme abgegeben hat, verläßt es den Sprühgranulator. Das Bitumen kann dann abgesackt werden oder wird - wenn erforderlich - einer Nachbehandlung unterworfen.

Figur 1 zeigt den Sprühgranulator. Oberhalb des rechteckigen Wirbelbettes steht der Sprühmischbehälter. Dieser Behälter hat eine Höhe von 3 Metern und einen Durchmesser von 2 Metern. Die Höhe des Sprühturmes wird durch die zur Abkühlung des Granulates benötigte Fallstrecke bestimmt.

Der Durchmesser des Behälters soll wenigstens 1 Meter größer sein als der größte Druchmesser des Sprühkegels. Dies soll vermeiden, daß das Versprühte gegen die Wand verdüst wird. Der Sprühkegeldurchmesser ist ein Erfahrungswert, der durch Vorversuche bestimmt werden muß. Für Bitumen ist der Wert für den Sprühkegeldurchmesser nur schwer zu errechnen.

Für Zerstäubungsaufgaben stehen Ein-, bzw. zweistoffdüsen und rotierende Scheiben zur Verfügung. Zweistoffdüsen liefern ein kleineres mittleres Korn als Einstoffdüsen, d. h., die Gesamtoberfläche des Granulates von Zweistoffdüsen ist erheblich größer als die von Einstoffdüsen. Deshalb benötigt man für Einstoffdüsen wesentlich weniger Trennmittel Kieselsäure Sipernat® 22S und es gibt zusätzlich kaum Betriebsprobleme. Einstoffdüsen mit einer Mindestbohrung von 1 mm werden eingesetzt. Kleinere Düsendurchmesser führen zu unerwünschten Verstopfungen. Der Mindestdurchmesser ist ein experimentell gefundener Wert. Der Sprühkegel wird so groß wie möglich gewählt (120 °), um einen optimalen Stoff- und Wärmeaustausch zu erzielen.

Das Bitumen verläßt die Düse bei einem Druck von 12 bar. Die Düse hat eine Bohrung von 1,5 mm. Bei diesen Bedingungen wird eine Kapazität von 75 kg / h Bitumengranulat erreicht.

Im Turm wird entsprechend dem gewünschten Massenstrom das Trennmittel Kieselsäure Sipernat® 22S über eine Schüttelrinne zugegeben. Das Bitumengranulat fällt in ein Vibrationswirbelbett. Die Fluidisierluft wird durch zwei Gebläse geliefert. Bei der Versuchsanlage hat das eine Gebläse einen Volumenstrom von 20 m³ / min. Das zweite Gebläse fördert 10 m³ / min. Die Luft im Turm wird oberhalb des Wirbelbettes über ein Filter durch ein drittes Gebläse abgesaugt. Dieses Gebläse hat einen Volumenstrom von 60 m³ / min. Der Überschußanteil der Luft wird oben im Turm durch eine Öffnung mit einem Durchmesser von 400 mm als Falschluft eingezogen. Diese Falschluft wandert dann im Gleichstrom mit dem Hauptproduktstrom durch den Sprühgranulator. Diese Konstruktion ermöglicht eine schlagartige Abkühlung des gerade versprühten Bitumens. Ein Gegenstromverfahren, wobei man die Luft oben im Turm abzieht, wäre auch möglich. Dies würde dann die Verveilzeit vom Granulat im Turm erhöhen.

Es hat sich während der Versuche herausgestellt, daß die angesaugte Umgebungsluft nicht genügend Kühlung bewirkt, um das heiße Bitumengranulat völlig abzukühlen. Dazu wurde neben dem Turm eine Kälteanlage installiert, die eine Abkühlung der Luft bis auf 10 °C ermöglicht.

Das abgekühlte Bitumengranulat verläßt über eine Absackvorrichtung den Sprühgranulator. Je nach Bedarf kann das Bitumen anschließend einer Nachbehandlung unterworfen werden. Ziel dieser Nachbehandlung ist eine genaue Abstellung der benötigten Menge an Trennmittel Kieselsäure Sipernat® 22S und eine Behandlung der Granulatoberfläche zur vollständigen Umhüllung mit dem Trennmittel Kieselsäure. Sipernat® 22S. Für diese Nachbehandlung wird ein Trommelmischer verwendet. Jeder andere Mischer ist auch einsetzbar, solange er eine schonende Behandlung des Granulates gewährleistet.

## Patentansprüche

1. Rieselfähiges Bitumengranulat mit einer Teilchengröße von 500 bis 700 »m, dadurch gekennzeichnet, daß es 0,5 bis 6 Gew.-% Fällungskieselsäure oder Ruß als Umpuderungs- und Trennmittel enthält und aus Bitumentröpfchen, die von dem Umpuderungs- und Trennmittel umhüllt und dadurch vor Verbackung und Verkleben an den Grenzflächen bewahrt werden, besteht.

2. Verfahren zur Herstellung des rieselfähigen Bitumengranulates nach Anspruch 1, dadurch gekennzeichnet, daß man in einem bekannten Sprühgranulator (Figur 1) heißes, flüssiges Bitumen verdüst und gleichzeitig über den Kaltluftstrom die Fällungskieselsäure oder den Ruß als Umpuderungs- und Trennmittel in den Sprühmischer einträgt, wobei die Bitumentröpfchen von dem Umpuderungs- und Trennmittel umhüllt und dadurch vor Verbackung und Verkleben an den Grenzflächen bewahrt werden.

## Claims

1. Free-flowing bitumen granules with a particle size of 500 to 700 »m, characterized in that they contain 0.5 to 6% by weight of precipitated silica or carbon black as a powdering or release agent and consist of bitumen droplets which are surrounded by the powdering and release agent and thus protected against caking and sticking at their interfaces.

2. A process for the production of the free-flowing bitumen granules claimed in claim 1, characterized in that hot liquid bitumen is sprayed into a known spray granulator (Fig. 1) and, at the same time, the precipitated silica or the carbon black is introduced into the spray mixer as powdering and release agent through the cold air stream, the bitumen droplets being surrounded by the powdering and release agent and thus protected against caking and sticking at their interfaces.

## Revendications

1. Granulé de bitume apte à l'écoulement, avec une taille de particules de 500 à 700 »m, caractérisé en ce qu'il contient de 0,5 à 6% en poids d'acide silicique de précipitation ou de noir de carbone comme agent d'empoudrage et de séparation et se compose de gouttelettes de bitume, qui sont enveloppées d'agent d'empoudrage et de séparation et de ce fait sont protégées contre la cuisson et le collage sur les surfaces limites.

2. Procédé de préparation du granulé de bitume apte à l'écoulement selon la revendication 1, caractérisé en ce qu'on atomise dans un granulateur à pulvérisation connu (figure 1) du bitume liquide très chaud et en même temps on introduit au moyen du courant d'air froid l'acide silicique de précipitation ou le noir de carbone comme agent d'empoudrage et de séparation dans le mélangeur de pulvérisation, les petites gouttes de bitume étant enveloppées par l'agent d'empoudrage et de séparation et de ce fait sont protégées contre la cuisson et le collage sur les surfaces limites.
